# EUROPEAN PATENT APPLICATION

(11) **EP 0 999 089 A1**
(43) Date of publication of application: **10.05.2000**
(21) Application number: 99300921.6
(22) Date of filing: 09.02.1999
(51) Int. Cl.: B60K 35/00

(54) **Display panel**

(30) Priority: 07.11.1998 GB 9824383
(71) Applicant: Dalgoutte, Callum, Ayrshire KA23 9JX, Scotland (GB); Dalgoutte, Donald Gary, Ayrshire KA12 8HS, Scotland (GB)
(72) Inventor: Dalgoutte, Callum, Ayrshire KA23 9JX, Scotland (GB); Dalgoutte, Donald Gary, Ayrshire KA12 8HS, Scotland (GB)
(74) Representative: Shanks, Andrew

(57) **Abstract**

There is provided a method of manufacturing a display panel (10, 11) and a display panel (10, 11) particularly for an aircraft. The display panel (10) comprises a structural back panel (12) of transparent material, surmounted by a cover panel (14) of transparent material. The cover panel (14) is mounted to the back panel (12) using a suitable adhesive (16), and a display is formed between the panels (12, 14) by screen printing a dark coloured ink coat (22) on to the lower surface of cover panel (14) before it is mounted to back panel (12). Areas of the lower surface of cover panel (14) are left to provide lettering (20) and the like which is translucent of fluorescent, such that, using a light source located behind the back panel (12), the lettering (20) is viewed from above cover panel (14), and is protected from damage by the cover panel (14). There is also provided a method of refurbishing a display panel and a refurbished display panel.

## Description

The present invention relates to a method of manufacturing a display panel and a display panel manufactured according to the method. The present invention also relates to method of refurbishing a display panel and a refurbished panel manufactured according to the method. In particular, but not exclusively, the present invention relates to a method of manufacturing an avionic display panel, that is a display panel for an aircraft, a method of refurbishing an avionic display panel, an avionic display panel and a refurbished avionic display panel.

Display panels of the type carrying information such as text, warning lights, indicating channels, gauges, read-outs and the like, highlighted by light sources located behind the panel, have various applications, particularly in the field of avionic display panels for aircraft.

It is known to manufacture such panels by taking a sheet of a suitable transparent plastics material; routing or milling the material so as to provide holes in the sheet for locating instrumentation and the like, and to enable the finished panel to be located in a suitable mounting; etching or engraving information such as text, indicating channels and the like into the surface of the sheet; painting over the surface of the sheet and the etched\engraved information; performing a "fine" etching or engraving of the sheet once the applied paint has cured to reveal the information previously etched onto the sheet; and finally carrying out a manual paint "touch-up" to correct any damage resulting from the paint etching process. Clearly, this is a slow and labourious process.

A conventional display panel, produced in this manner, has the disadvantage that the paint coating is prone to chipping and scratching during manufacture and installation, leading to high levels of product returns. Further, in fitted panels, which are not easily repairable, such paint damage will often obscure the text and other information carried by the panel, particularly in conditions of low ambient light levels, when the light sources located behind the panel are visible through the damaged areas. The fragility of the paint coating also limits the ability to clean the panel: for example, if a member of a flight crew spills a drink over a panel, it will often not be possible to clean the panel without causing damage to the paint coating, and as a result the appearance of the panels may deteriorate quite rapidly, giving a poor impression of the aircraft.

It is amongst the objects of embodiments of the present invention to obviate or mitigate at least one of these disadvantages.

According to a first aspect of the present invention, there is provided a method of manufacturing a display panel, the method comprising the steps of:
providing a first sheet of light transmitting material;
providing a second sheet of light transmitting material;
providing a display between an upper surface of the first sheet and a lower surface of the second sheet; and
mounting the second sheet over the first sheet with the display therebetween and such that the display is visible through the second sheet.

According to a second aspect of the present invention, there is provided a display panel adapted to be mounted in a vehicle, the display panel comprising:
a first sheet of light transmitting material;
a second sheet of light transmitting material mounted on the first sheet; and
a display between an upper surface of the first sheet and a lower surface of the second sheet, such that the display is visible through the second sheet.

As the display is located beneath the second sheet, it is protected from damage during handling, fitting and use. Accordingly, the display panel of the present invention is likely to be more robust than conventional display panels, and will retain its appearance over a far longer period.

The display panel of the present invention has particular application in display panels for aircraft, and the method may be usefully applied to the refurbishment of existing display panels in aircraft. In this situation, the first sheet may be in the form of an existing display panel carrying an existing display. Of course the existing display will be adapted to the new display, for example by removing areas of the existing display, before application of the new display.

Preferably, the first sheet is adapted to be received by a mounting, on which the display panel is to be mounted. The mounting may take the form of a surface or frame.

Preferably also, one or more apertures are provided in the first sheet, which apertures are adapted to receive articles to be mounted on or in the display panel. The apertures may be cut from the sheet.

Preferably also, an opaque coating is applied to edges of the first sheet, and an opaque coating may be applied to the walls of any apertures in the sheet.

Preferably also, the display is a coating applied to the lower surface of the second sheet. Most preferably, the display comprises a dark opaque coating and is applied to a first portion of the lower surface of the second sheet, a selected second portion of the lower surface remaining uncoated. Accordingly, if a light source is positioned behind the display panel, light will be transmitted through the sheets at said second portions. Preferably also, a second surface coating is applied to at least the second portion of the lower surface of the second sheet. The second surface coating may be light transmitting, and is preferably translucent or light diffusing. Thus, if a light source is provided behind the display panel, a diffused light will be visible through the second surface coating. Alternatively, or in addition, the second surface coating may include letters, numerals, symbols or instrument markings. If desired, letters, numerals and the like may be applied to the lower surface of the second sheet prior to the coating. In an alternative embodiment, one or more coatings may be applied to the upper surface of the first sheet as an alternative or in addition to one or more coatings applied to the second sheet. The coatings may be applied by any suitable method, such as screen printing.

Preferably also, the second sheet is mounted on the first sheet using an adhesive. In other embodiments, fasteners, such as screws, may be utilised, or the sheets may be registered on pins or the like extending from a display panel mounting board or frame.

According to a third aspect of the present invention, there is provided a method of refurbishing a display panel having a light transmitting base panel and a display on a upper surface of the panel defining light transmitting portions, the method comprising the step of applying an opaque coating to the display on the upper surface of the base panel to create alternative light transmitting portions and thus create an alternative display.

According to a fourth aspect of the present invention, there is provided a refurbished display panel manufactured in accordance with the third aspect of the present invention.

These aspects of the present invention have particular application in the refurbishment of aircraft, for example when a passenger aircraft is being altered and refurbished for use in air freight operations. In this situation, many of the display panels on the flight deck have to be altered to reflect the alterations to the aircraft. It is of course possible to replace the original display panels, however this is expensive and time consuming. Alternatively, it is possible to alter a display panel by applying appropriate stickers and transfers to the panel surface, however the appearance of such stickers and transfers is likely to be unacceptable to potential users and is likely to deteriorate rapidly in use.

Preferably, the opaque coating is applied as a continuous coating and is then selectively removed, conveniently by engraving, to create the alternative light transmitting portions. Alternatively, the opaque coating is applied selectively to define the alternative light transmitting portions.

Preferably also, further markings, such as letters, numerals, symbols or instrument markings, are applied to the base panel.

Any apertures in the base panel which are not required in the refurbished panel may be filled prior to the application of the coating. Of course, where an infilled area is to be light transmitting in the refurbished panel, the infill material should itself be light transmitting.

The above described aspects of the present invention may be applied equally to a method of manufacturing a display panel and a display panel as to a method of refurbishing a display panel and a refurbished display panel.

As alternatives to the above described aspects of the present invention, the method of manufacturing a display panel, the display panel, the method of refurbishing a display panel and/ or the refurbished display panel may comprise providing first and second sheets, wherein one or more of the first and second sheets are opaque, the one or more sheets being provided with suitable cut-out portions which enable light to be transmitted through said one or more sheets.

Embodiments of the present invention will now be described, by way of example, with reference to the accompanying drawings, in which:
Figure 1 is a front view of an embodiment of a display panel in accordance with the present invention;
Figure 2 is a sectional view on line 2 - 2 of Figure 1;
Figure 3 is a front view of an alternative embodiment of a display panel in accordance with the present invention; and
Figure 4 is a sectional view on line 3 - 3 of Figure 3.

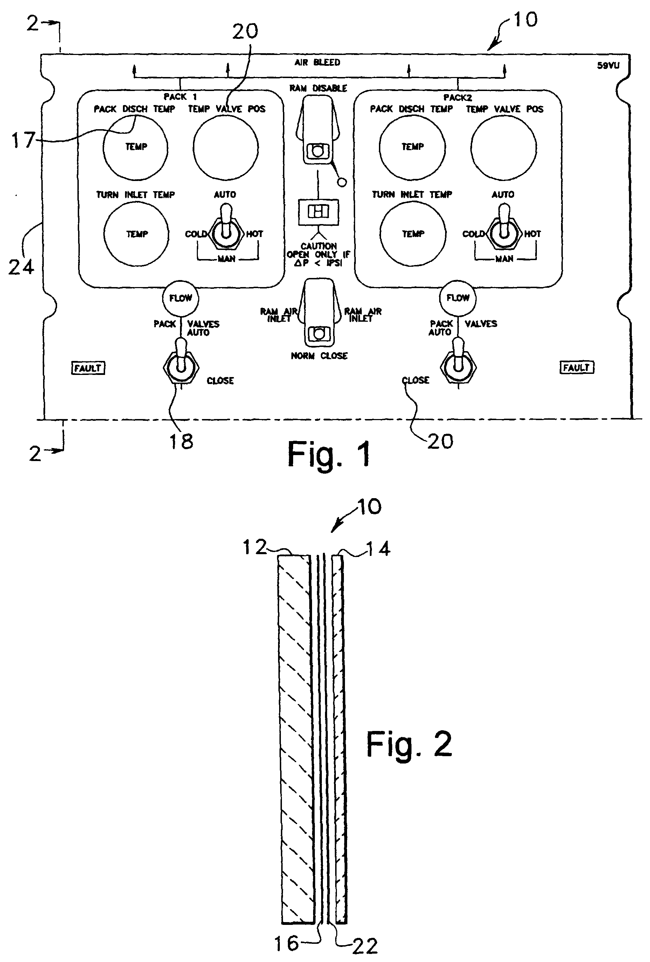

Referring firstly to Figures 1 and 2 of the drawings, there is shown a preferred embodiment of a refurbished display panel in accordance with the present invention, in the form of an avionic light panel 10. The panel 10 is intended for mounting in the flight deck of an aircraft, on an appropriate mounting carrying various back-lit gauges and dials, warning lights and the like.

The panel 10 comprises a transparent first sheet or structural back panel 12 of transparent material, typically a transparent polycarbonate, surmounted by a second sheet or cover panel 14 of transparent material, such as a polycarbonate, typically LEXAN (trade mark), commercially available from GE Industries. Alternatively, the panels 12 and 14 are of a suitable transparent acrylic material, or of a metal such as aluminium alloy, such metal panels being provided with appropriate cut-out portions to enable light to shine through the panel. The panels 12, 14 are fixed to one another using an appropriate adhesive 16.

The panels 12, 14 include various cut-outs 17 to receive switches 18, dials and the like.

The lettering, symbols and lines 20 appearing on the panel 10 are applied to the lower surface of the cover panel 14 by screen printing, as is a dark coloured ink coat 22 which prevents transmission of stray light through the upper panel 14. Typically, the paint coat 22 will be applied first, leaving areas to receive the lettering 20, which may be translucent or fluorescent. An opaque ink or other coating is also applied to the panel edges 24 and the walls of the cut-outs.

It will be apparent to those of skill in the art that the above described panel 10 will have an attractive appearance, and that the lettering 20 and paint coat 22 are protected from wear and damage by the cover panel 14. Thus, the panel 10 will retain its initial appearance, even after prolonged service.

It will also be apparent to those of skill in the art that the above described process may be usefully employed in refurbishing or altering existing conventional avionic display panels, in which the cover panel 14 may carry an alternative display format.

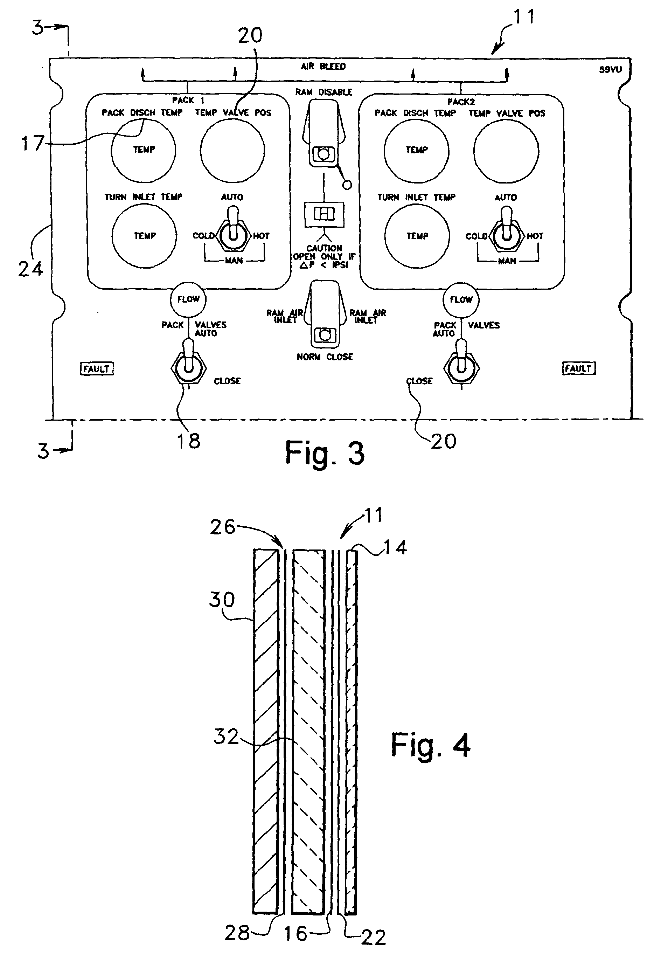

Referring now to Figures 3 and 4, there is shown a preferred embodiment of a new display panel in accordance with the present invention, in the form of an avionic light panel 11. Components of the panel 11 which are similar to those of the embodiment of Figures 1 and 2 share the same reference numbers. The panel 11 comprises a first sheet or structural back panel shown generally at 26, surmounted by a second sheet or cover panel 14 of a transparent material such as polycarbonate (typically LEXAN) , acrylic, or a metal such as aluminium alloy, as described above.

The panel 26 itself comprises first and second sheets 30 and 32 of transparent material, typically a transparent polycarbonate. Alternatively, the sheets 30 and 32 are of acrylic, or a metal such as aluminium, as described above with reference to panels 12 and 14.

The sheets 30 and 32 are fixed to one another using a suitable adhesive 28, which, when the sheets 30 and 32 are of a polycarbonate or acrylic material, is an acrylic adhesive. The panel 14 has lettering, symbols and lines 20 on the lower surface thereof, as described above. The first sheet 30 of the panel 26 can support suitable apparatus (not shown) for providing the back lighting to the gauges, dials, warning lights and the like. Alternatively, such apparatus is carried in the mounting to which the panel 11 is to be mounted.

The advantages of constructing the panel 11 incorporating a back panel 26 comprising first and second sheets 30 and 32 include simpler machining of the panel 26 to form required cut-outs, and reductions in cost are achieved.

It will be appreciated by those of skill in the art that the embodiments of Figures 1 and 2 or Figures 3 and 4 may be applied equally to a method of refurbishing a display panel and to a refurbished display panel as to a method of manufacture of a new display panel and a new display panel.

In another aspect of the present invention, an existing avionic display panel may be refurbished by covering the existing panel upper surface with an opaque paint or ink and etching or engraving an alternative display format therein.

## Claims

1. A method of manufacturing a display panel, the method comprising the steps of:
providing a first sheet of light transmitting material;
providing a second sheet of light transmitting material;
providing a display between an upper surface of the first sheet and a lower surface of the second sheet; and
mounting the second sheet over the first sheet with the display therebetween and such that the display is visible through the second sheet.

2. A display panel adapted to be mounted in a vehicle, the display panel comprising:
a first sheet of light transmitting material;
a second sheet of light transmitting material mounted on the first sheet; and
a display between an upper surface of the first sheet and a lower surface of the second sheet, such that the display is visible through the second sheet.

3. A display panel as claimed in claim 2 wherein the first sheet is adapted to be received by a mounting, on which the display panel is to be mounted.

4. A display panel as claimed in claim 3 wherein the mounting takes the form of a surface.

5. A display panel as claimed in claim 3 wherein the mounting takes the form of a frame.

6. A display panel as claimed in any one of claims 2 to 5 wherein one or more apertures are provided in the first sheet, which apertures are adapted to receive articles to be mounted on or in the display panel.

7. A display panel as claimed in claim 6 wherein the apertures are cut from the sheet.

8. A display panel as claimed in either of claims 6 or 7 wherein an opaque coating is applied to edges of the first sheet, and an opaque coating is applied to the walls of any apertures in the sheet.

9. A display panel as claimed in any one of claims 2 to 8 wherein the display is a coating applied to the lower surface of the second sheet.

10. A display panel as claimed in any one of claims 2 to 9 wherein the display comprises a dark opaque coating and is applied to a first portion of the lower surface of the second sheet, a selected second portion of the lower surface remaining uncoated.

11. A display panel as claimed in claim 10 wherein a second surface coating is applied to at least the second portion of the lower surface of the second sheet.

12. A display panel as claimed in claim 11 wherein the second surface coating is light transmitting.

13. A display panel as claimed in claim 11 wherein the second surface coating is translucent.

14. A display panel as claimed in claim 11 wherein the second surface coating is light diffusing.

15. A display panel as claimed in any one of claims 11 to 14 wherein the second surface coating includes letters, numerals, symbols or instrument markings.

16. A display panel as claimed in any one of claims 5 to 8 wherein one or more coatings are applied to the upper surface of the first sheet.

17. A display panel as claimed in any one of claims 9 to 15 wherein one or more coatings are applied to the upper surface of the first sheet in addition to one or more coatings applied to the second sheet.

18. A display panel as claimed in either of claims 16 or 17 wherein the coatings are applied by any suitable method, such as screen printing.

19. A display panel as claimed in any one of claims 2 to 18 wherein the second sheet is mounted on the first sheet using an adhesive.

20. A method of refurbishing a display panel having a light transmitting base panel and a display on a upper surface of the panel defining light transmitting portions, the method comprising the step of applying an opaque coating to the display on the upper surface of the base panel to create alternative light transmitting portions and thus create an alternative display.

21. A refurbished display panel manufactured in accordance with the method of claim 20.

22. A method of refurbishing a display panel as claimed in claim 20 wherein the opaque coating is applied as a continuous coating and is then selectively removed, conveniently by engraving, to create the alternative light transmitting portions.

23. A method of refurbishing a display panel as claimed in claim 20 wherein the opaque coating is applied selectively to define the alternative light transmitting portions.

24. A method of refurbishing a display panel as claimed in claim 20 or either of claims 22 or 23 wherein further markings, such as letters, numerals, symbols or instrument markings, are applied to the base panel.

25. A method of refurbishing a display panel as claimed in claim 20 or any one of claims 22 to 24 wherein any apertures in the base panel which are not required in the refurbished panel are filled prior to the application of the coating.
